# EUROPEAN PATENT APPLICATION

(11) **EP 1 204 027 A2**
(43) Date of publication of application: **08.05.2002**
(21) Application number: 01126012.2
(22) Date of filing: 31.10.2001
(51) Int. Cl.: G06F 11/10, G06F 11/14

(54) **On-line reconstruction processing method and on-line reconstruction processing apparatus**

(30) Priority: 02.11.2000 JP 2000336646
(71) Applicant: MATSUSHITA ELECTRIC INDUSTRIAL CO., LTD., Kadoma-shi, Osaka 571-8501 (JP)
(72) Inventor: Nishikawa, Junji, Osaka-shi, Osaka 545-0053 (JP); Migita, Manabu, Neyagawa-shi, Osaka 572-0802 (JP)
(74) Representative: Grünecker, Kinkeldey, Stockmair & Schwanhäusser Anwaltssozietät

(57) **Abstract**

An on-line reconstruction processing method for data storage array apparatus which possesses plural segments formed of divided storage areas in plural data storage units and plural parity groups grouped of the segments in the plural data storage units by a specified algorithm, and stores redundancy data into at least one segment of the plural parity groups, has
a first step of specifying the parity group which needs to be reconstructed;
a second step of reading data of the parity group which needs to be reconstructed, from the data storage units;
a third step of reconstructing the data of the parity group with the data read out by the second step; and
a fourth step of writing the data reconstructed by the third step into the data storage array apparatus,
wherein the second step includes a read instruction step of instructing the data storage units corresponding to the parity groups to read data and a data output step at which the data storage units perform data read and output according to the read instructions,
the fourth step includes a write instruction step of instructing the data storage units corresponding to the parity groups to write the reconstructed data and a data input step at which the data storage units receive and write the reconstructed data according to the write instructions, and
an external host device performs data access to the data storage array apparatus between beginning of the read instruction step and end of the data input step.

## Description

### [Detailed Description of the Invention]

### [Field of the Invention]

The present invention relates to an apparatus and a method for on-line reconstruction processing of redundancy-structure type to store continuous media data, such as video data.

### [Related Art of the Invention]

With recent development of multimedia technology, continuous media data, such as digitized moving pictures and/or voice data, has been stored into random accessible data storage units including a hard disk drive. In addition, continuous media data has a large data size, so that an array-structured server system which is provided with plural data storage units has been developed and it virtually behaves as one large capacity device for the outside.

Generally, data blocks of a predetermined side are continuously accessed in such a server system, and then the server system transfers data at a high data transfer rate. In the case where stored data is video data according to MPEG standard, the transfer rate may be from 1.5 Mbps to 30 Mbps.

In addition, for access to continuous media data, not only high data transfer rate but also stable response performance for continuous reproduction of moving pictures and/or voice data is required. Furthermore, even if one part of the data storage units is failed, the data storage array apparatus must possess the reliability for continuous operation. Therefore, if a redundancy array structure which includes plural data storage units is adopted using Redundant Array of Inexpensive Disks (RAID) technique, correct data can be recovered using redundancy data even if one part of the data storage units is failed.

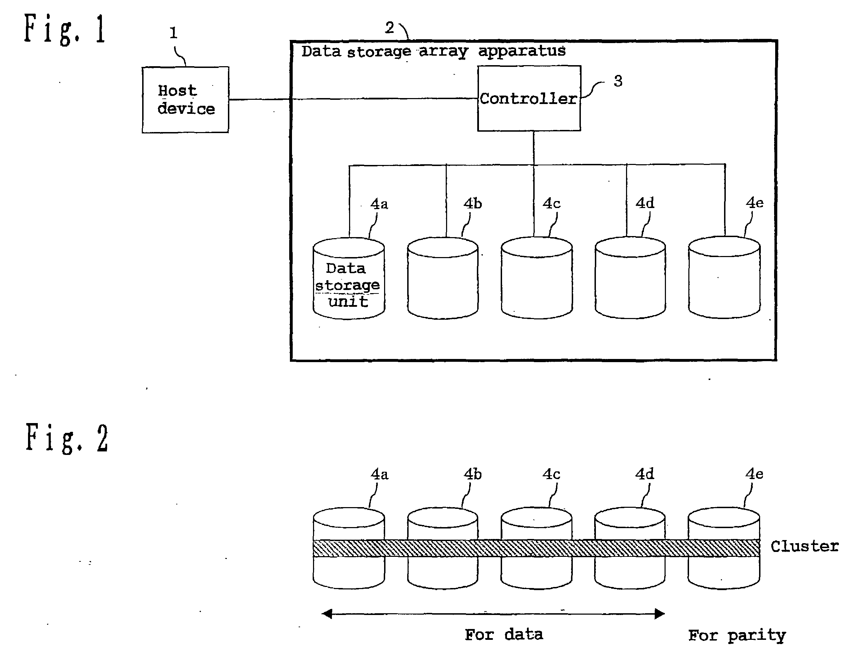

A server system constituted of RAID 3 typed data storage array apparatus is illustrated in FIG. 1. In the data storage array apparatus, data storage units 4a to 4d store data, and a data storage unit 4e stores redundancy data. An external host device 1 issues data access requests to the data storage array apparatus. The external host device 1 and the data storage array apparatus are connected using interface according to FastWideSCSI or FibreChannel standard. A controller 3 receives a data access request issued by the external host device 1, and issues divided data access requests to the data storage units 4a to 4e. Therefore, the controller 3 is means of data access to the data storage units 4a to 4e. For example, when receiving a read request, data in the data storage units 4a to 4e is read out to be transferred to the host device 1. When the access request to the data storage units 4a to 4e is completed, the controller 3 informs the external host device 1 of transfer completion.

Referring now to FIG. 2, data read and write methods in the RAID 3 typed data storage array apparatus will be described. The controller 3 manages data and redundancy data which are grouped as a cluster, according to a data access request from the external host device 1. As shown in FIG. 2, if five data storage units 4a to 4e are employed, a grouped cluster data is divided and stored into five disks. For this cluster data, the data is divided and stored into four data storage units 4a to 4d, and the redundancy data is stored in the data storage unit 4e. In generation of redundancy data, a parity method is generally adopted. The data storage unit 4e is employed for parity, and the parity which is generated from data stored in the four data storage units 4a to 4d is stored in the data storage unit 4e.

When writing data from the external host device 1, the controller 3 calculates parity value for the data, and then the data and the parity are stored into the five data storage units 4a to 4e. When receiving a data read request from an external host device, normally data stored in the four data storage units 4a to 4d is grouped, and then transferred to the external host device. If one of the data storage units 4a to 4d is failed, parity is calculated using data, which is read out from the three normal data storage units and the data storage unit 4e for parity, to recover and then transfer the data to the host device 1.

Next, operations after replacing a failed data storage unit will be described. As the'above-described read operations, the data storage array apparatus using RAID technique can recover data without halting the system even if one of the data storage units is failed. In the case that one of the data storage units is failed and the data storage array apparatus keeps accessing without using the failed unit and redundancy is continued, the operations are generally referred to as degradiation operation.

However, since redundancy is not employed during the degradiation operation, the failed data storage unit must be replaced to return to the normal state. Furthermore, after replacing the failed data storage unit, data must be reconstructed using the remaining normal data storage units and then recovered for a new data storage unit. These operations are generally referred to as reconstruction operation.

The reconstruction operation is executed with steps of reading data from data storage units, of calculating parity, and of writing reconstructed data. For example, in the reconstruction operation after replacing the data storage unit 4a, parity is calculated for each of all clusters requiring reconstruction based on data read out from the data storage units 4b to 4e. Subsequently, data for the data storage unit 4a is recovered, and then stored into the data storage unit 4a. Such a reconstruction operation is repeated until clusters without redundancy do not exist. In addition, such a reconstruction operation is performed in parallel with external access operations by the external host device 1, so that the system is available during the reconstruction operation. In this way, high reliable storage apparatus can be achieved.

However, data storage array apparatus in the past has possessed the following problems. As described above, data storage array apparatus in a reconstruction state receives external access requests during reconstruction operation. In this case, after completion of reconstruction operation, external access operations are performed according to the requests, so that external access performance lowers. To solve this problem, Japanese Patent Laid-Open Hei 5-127839 describes a technique, in which frequency of reconstruction operation is controlled according to frequency of external access requests, i.e., the number of reconstruction operations is decreased and external accesses are performed between subsequent reconstruction operations.

Also, Japanese Patent Laid-Open Hei 10-161817 describes another technique, in which operations for external access requests are performed with higher priority than that of reconstruction operations. As an example, if an external data write request is received and the data storage unit corresponding to the write request is under reconstruction operation, the external data write request is performed prior to the reconstruction operation and the reconstruction operation is interrupted. The inventor presume that after completion of the data write, it seems that the reconstruction operation is not executed. The entire disclosure of Japanese Patent Laid-open Hei5-127839 and Hei10-161817 are incorporated herein by reference in its entirety.

However, data storage array apparatus which processes continuous media data including moving pictures and/or voice data is required to possess not only average access performance but also faster response performance for external access. In the two above-mentioned specifications, average external access performance may improve, but external access response performance for data storage units cannot be improved.

The reason is that in the conventional reconstruction processing including the two specifications, sequential three operations, such as read operations for data storage units, data recovery operations, and write operations for data storage units, could not be divided. Therefore, if data storage array apparatus is under reconstruction processing and then accessed from a host device, the external access can not be performed until the reconstruction processing is completed. As a result, access response performance for external access requests cannot be improved.

### SUMMARY OF THE INVENTION

It is therefore an object of the present invention to provide a method and apparatus for on-line reconstruction processing which enable reconstruction processing to be performed with redundancy while data access performance for continuous media data to the outside is guaranteed.

The 1st invention of the present invention is an on-line reconstruction processing method for data storage array apparatus which possesses plural segments formed of divided storage areas in plural data storage units and plural parity groups grouped of the segments in the plural data storage units by a specified algorithm, and stores redundancy data into at least one segment of the plural parity groups, comprising:
a first step of specifying the parity group which needs to be reconstructed;
a second step of reading data of the parity group which needs to be the constructed, from the data storage units;
a third step of reconstructing the data of the parity group with the data read out by the second step; and
a fourth step of writing the data reconstructed by the third step into the data storage array apparatus,
wherein the second step includes a read instruction step of instructing the data storage units corresponding to the parity groups to read data and a data output step at which the data storage units perform data read and output according to the read instructions,
the fourth step includes a write instruction step of instructing the data storage units corresponding to the parity groups to write the reconstructed data and a data input step at which the data storage units receive and write the reconstructed data according to the write instructions, and
an external host device performs data access to the data storage array apparatus between beginning of the read instruction step and end of the data input step.

The 2nd invention of the present invention is an on-line reconstruction processing method for data storage array apparatus, which possesses plural segments formed of divided storage areas in plural data storage units and plural parity groups grouped of the segments in the plural data storage units by a specified algorithm, and stores redundancy data into at least one segment of the plural parity groups, comprising:
a first step of specifying the parity group which need to be reconstructed;
a second step of reading data of the parity group which need to be the reconstructed, from the data storage units;
a third step of reconstructing the data of the parity group with the data read out by the second step; and
a fourth step of writing the data reconstructed by the third step into the data storage array apparatus,
wherein the second step includes a read instruction step of instructing the data storage units corresponding to the parity groups to read data and a data output step at which the data storage units perform data read and output according to the read instructions,
the fourth step includes a write instruction step of instructing the data storage units corresponding to the parity groups to write the reconstructed data and a data input step at which the data storage units receive and write the reconstructed data according to the write instructions, and
an external host device performs data access to the data storage array apparatus between beginning of the data output step and end of the data input step.

The 3rd invention of the present invention is the on-line reconstruction processing method as described in 1st or 2nd inventions, wherein if data access from the external host device instructs external read of data to the external host device, whether the parity group specified by the instruction is the same as the parity group specified by the first step or not, the step when the instruction was received is continued or the next step is performed after the external read operations.

The 4th invention of the present invention is the on-line reconstruction processing method as described in 1st or 2nd inventions, wherein if data access from the external host device instructs data write to the data storage array apparatus from the external host device,

in the case where the address of the parity group specified by the instruction is the same as the address specified by the first step, the data write operations from the external host device are performed and the fourth step is not performed or interrupted, and
in the case where the address of the parity group specified by the instruction is different from the address specified by the first step, the step when the instruction was received is continued after completion of the data write operations.

The 5th invention of the present invention is the on-line reconstruction processing method as described in 1st or 2nd inventions, further comprising;

A fifth step of, setting an adjustable shift time between each of steps which are on or after the timing of the data access.

The 6th invention of the present invention is the on-line reconstruction processing method as described in 5th invention, wherein the shift time is set at least at the second step and/or at the fourth step.

The 7th invention of the present invention is the on-line reconstruction processing method as described in 5th invention, wherein the shift time is varied according to data access frequency from the external host device.

The 8th invention of the present invention is the on-line reconstruction processing method as described in 5th invention, wherein the shift time is varied according to an average band of data access from the external host device.

The 9th invention of the present invention is the on-line reconstruction processing method as described in 5th invention, wherein the shift time is set to be zero after completion of data access from the external host device.

The 10th invention of the present invention is an on-line reconstruction processing apparatus in data storage array apparatus which possesses plural segments formed of divided storage areas in plural data storage units and plural parity groups grouped of the segments in the plural data storage units by a specified algorithm, and stores redundancy data into at least one segment of the plural parity groups, comprising:
first means of specifying the parity group which needs to be reconstructed;
second means of reading data of the parity group which needs to be reconstructed, from the data storage units;
third means of reconstructing the data of the parity group with the data read out by the second step; and
fourth means of writing the data reconstructed by the third step into the data storage array apparatus,
wherein the second means performs read instructions to instruct the data storage units corresponding to the parity groups to read data and performs data output operations in which the data storage units read and output data according to the read instructions,
the fourth means performs write instructions to instruct the data storage units corresponding to the parity groups to write the reconstructed data and performs data input operations in which the data storage units receive and write the reconstructed data according to the write instructions, and
an external host device performs data access to the data storage array apparatus between beginning of the read instructions and end of the data input operations.

The 11th invention of the present invention is an on-line reconstruction processing apparatus in data storage array apparatus which possesses plural segments formed of divided storage areas in plural data storage units and plural parity groups grouped of the segments in the plural data storage units by a specified algorithm, and stores redundancy data into at least one segment of the plural parity groups, comprising:
first means of specifying the parity group which needs to be reconstructed;
second means of reading data of the parity group which needs to be reconstructed, from the data storage units;
third means of reconstructing the data of the parity group with the data read out by the second step; and
fourth means of writing the data reconstructed by the third step into the data storage array apparatus,
wherein the second means performs read instructions to instruct the data storage units corresponding to the parity groups to read data and performs data output operations in which the data storage units read and output data according to the read instructions,
the fourth means performs write instructions to instruct the data storage units corresponding to the parity groups to write the reconstructed data and performs data input operations in which the data storage units receive and write the reconstructed data according to the write instructions, and
an external host device performs data access to the data storage array apparatus between beginning of the data output operations and end of the data input operations.

The 12th invention of the present invention is the on-line reconstruction processing apparatus as described in 10th or 11th inventions, wherein if data access from the external host device instructs external read of data to the external host device, whether the parity group specified by the instruction is the same as the parity group specified by the first means or not, the operation of the means when the instruction was received is continued or the operation of the next means is performed after the external read operations.

The 13th invention of the present invention is the on-line reconstruction processing apparatus as described in 10th or 11th inventions, wherein if data access from the external host device instructs data write to the data storage array apparatus from the external host device,
in the case where the address of the parity group specified by the instruction is the same as the address specified by the first means, data write operations from the external host device are performed and the operation of the fourth means is not performed or interrupted, and
in the case where the address of the parity group specified by the instruction is different from the address specified by the first means, the operation of the previous means when the instruction was received is continued after completion of the data write operations.

The 14th invention of the present invention is the on-line reconstruction processing apparatus as described in 10th or 11th inventions, further comprising;

A fifth means of setting an adjustable shift time between the operations of each means which are on or after the timing of the data access.

The 15th invention of the present invention is the on-line reconstruction processing apparatus as described in 14th invention, wherein the shift time is set at least in operations of the second means and/or the fourth means.

The 16th invention of the present invention is the on-line reconstruction processing apparatus as described in 14th invention, wherein the shift time is varied according to data access frequency from the external host device.

The 17th invention of the present invention is the on-line reconstruction processing apparatus as described in 14th invention, wherein the shift time is varied according to average band of data access from the external host device.

The 18th invention of the present invention is the on-line reconstruction processing apparatus as described in 14th invention, wherein the shift time is set to be zero after completion of data access from the external host device.. 19. Programs to make a computer execute all or one part of the on-line reconstruction processing method as described in 1st invention, which comprises:
a first step of specifying the parity group which needs to be reconstructed;
a second step of reading data of the parity group which needs to be reconstructed, from the data storage units, including a read instruction step of instructing the data storage units corresponding to the parity groups to read data and a data output step at which the data storage units perform data read and output according to the read instructions;
a third step of reconstructing the data of the parity group with the data read out by the second step; and
a fourth step of writing the data reconstructed by the third step into the data storage array apparatus, including a write instruction step of instructing the data storage units corresponding to the parity groups to write the reconstructed data and a data input step at which the data storage units receive and write the reconstructed data according to the write instructions.

The 20th invention of the present invention is a medium stores programs to make a computer execute all or one part of the on-line reconstruction processing method as described in 1st invention, which comprises:
a first step of specifying the parity group which needs to be reconstructed;
a second step of reading data of the parity group which needs to be reconstructed from the data storage units, including a read instruction step of instructing the data storage units corresponding to the parity groups to read data and a data output step at which the data storage units perform data read and output according to the read instructions;
a third step of reconstructing the data of the parity group with the data read out by the second step; and
a fourth step of writing the data reconstructed by the third step into the data storage array apparatus, including a write instruction step of instructing the data storage units corresponding to the parity groups to write the reconstructed data and a data input step at which the data storage units receive and write the reconstructed data according to the write instructions,
and enables a computer to process the programs.

### [Brief Description of the Drawings]

FIG. 1 is a block diagram showing a structure of data storage array apparatus according to a first embodiment of the present invention.
FIG. 2 is a block diagram showing a management area of data storage array apparatus according to the first embodiment of the present invention.
FIG. 3 illustrates processing of the controller 3.
FIG. 4 illustrates a structure example of the cluster management table 36.
FIG. 5 illustrates state transition of each cluster.
FIG. 6 illustrates state transition of the access state of each cluster.
FIG. 7 is a reconstruction access timing chart in prior art.
FIG. 8 is a reconstruction access timing chart according to a second embodiment of the present invention.
FIG. 9 is a reconstruction access timing chart to the same cluster according to the second embodiment of the present invention.
FIG. 10 is a timing chart for reconstruction processing steps.
FIG. 11 is a timing chart for reconstruction processing steps with delay.
FIG. 12 is a Read access flow chart to the data storage unit 4.
FIG. 13 is a Write access flow chart to the data storage unit 4.
FIG. 14 is a reconstruction access flow chart of the cluster controller 32.
FIG. 15 is a flow chart showing acquisition operations for a cluster access right.
FIG. 16 is a flow chart showing release operations for a cluster access right.
FIG. 17 (a) is a timing chart for operations according to the first embodiment of the present invention.
FIG. 17 (b) is a timing chart for operations according to the first embodiment of the present invention.
FIG. 17 (c) is a timing chart for operations according to the first embodiment of the present invention.

### [Description of Symbols]

- 1: Host device
- 2: Data storage array apparatus
- 3: Controller
- 4: Data storage unit
- 31: Host execution part
- 32: Cluster controller
- 33: Array controller
- 34: Redundancy calculator
- 35: Data storage unit manager

### PREFERRED EMBODIMENTS OF THE INVENTION

Embodiments of the present invention will be described below in detail with reference to the accompanying drawings.

### (First embodiment)

The structure of data storage array apparatus, which is provided with an on-line reconstruction processing apparatus according to a first embodiment of the present invention, is illustrated in FIGS. 1 and 2. Since the data storage array apparatus possesses essentially the same structure as conventional apparatus, common items between them are not explained.

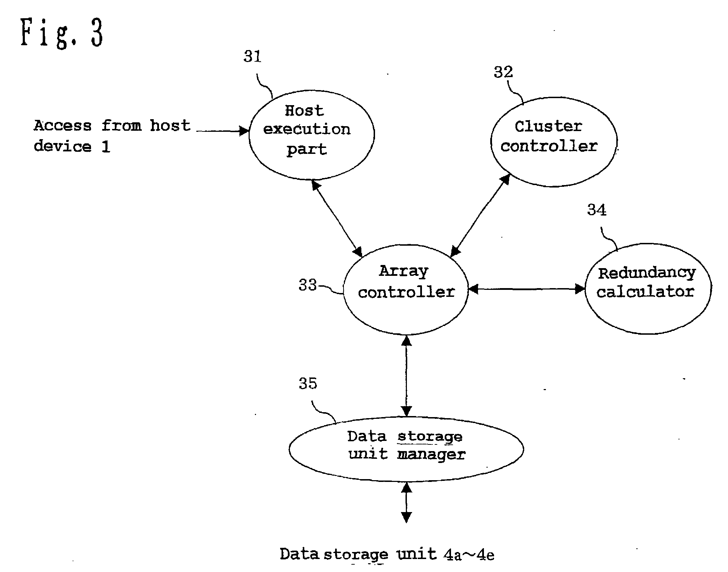

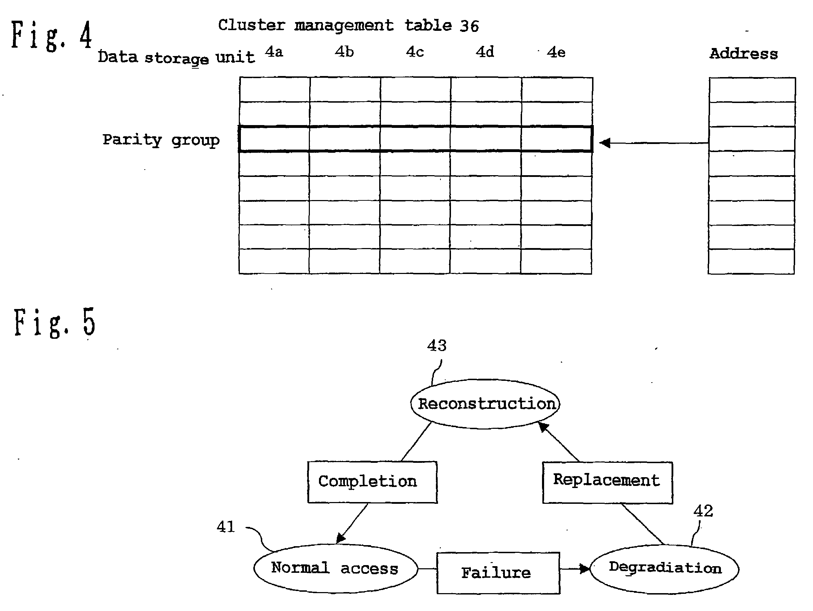

With reference to FIGS. 3 and 4, a structure of a controller 3 in the data storage array apparatus will be described. A host execution part 31 controls analysis and completion notice of data access requests from an external host device 1, and access data transfer. An array controller 33 transforms data access requests to cluster access requests. A redundancy calculator 34 generates redundancy data in cluster data and performs cluster data recovery due to a failed data storage unit. A data storage unit controller 35 controls data storage units 4a to 4e according to a cluster access request issued by the array controller 33. A cluster controller 32 recovers cluster data which lost redundancy (one portion of cluster data is lost resulting from a failed or a replaced data storage unit), so as to possess redundancy again with reference to a cluster management table 36. The cluster management table 36 is a table which is stored in the cluster controller 32 and employed to manage redundancy states of cluster data.

For the on-line reconstruction processing apparatus having such a structure according to this embodiment, basic operations, such as data management methods, generation and recovery of redundancy data, and read/write and reconstruction of data, will be described. Furthermore, an embodiment of on-line reconstruction processing methods according to the present invention will be described below.

First, with reference to FIG. 2, data management methods, and redundancy data generation and data recovery processing in the data storage array apparatus 2 will be explained. The controller 3 manages cluster data, which is constituted of data groups according to data access requests from the external host device 1 and the calculated redundancy data corresponding to the data groups. If five data storage units 4a to 4e are employed, the cluster data is stored so that the divided data is stored into four data storage units 4a to 4d and the redundancy data is stored into the remaining data storage unit 4e. In generation of redundancy data, parity methods are generally employed. For example, when writing data from the external host device 1, parity value is calculated, and then the data and the parity are stored into the five data storage units 4a to 4e. The parity which is redundancy data is set so that the total number of 1 in data stored in the four data storage units 4a to 4d becomes even number including parity bit. If data values are 0,1,0, and 0, the parity value is 1 and then this value is stored into the data storage unit 4e employed for parity. When receiving a data read request from the external host device 1, cluster data is read out from the five data storage units 4a to 4e. At this point, if one of the data storage units 4a to 4d is failed, one portion of cluster data is read out from the remaining four data storage units, and then the parity is calculated to recover one portion of the lost cluster data due to failure. In the above-described case, by using the values 0, 1, and 0 in the data storage units 4a to 4d and the parity value 1 in the data storage unit 4e, data stored in the remaining data storage unit 4e is recovered to be 0. In this embodiment, even parity is adopted, but odd parity may be adopted in the same way.

Next, data write operations in the data storage array apparatus 2 will be described. When the host execution part 31 receives a data write request from the external host device 1, the host execution part 31 notifies the array controller 33 of the data write request. The array controller 33 transforms the data write request into a cluster access request, and then calculates redundancy data (parity data) corresponding to the write data using a redundancy calculator 34 to generate cluster data. Subsequently, the array controller 33 writes the cluster data into the data storage units 4a to 4e through the data storage unit controller 35. After completion of the cluster data write operations, the host execution part 31 notifies the external host device 1 of completion of the data write request.

Next, data read operations in the data storage array apparatus 2 will be described. When the host execution part 31 receives a data read request from the external host device 1, the host execution part 31 notifies the array controller 33 of the data read request. The array controller 33 transforms the data read request into a cluster access request, and then reads cluster data from the data storage units 4a to 4e through the data storage unit controller 35. After completion of the cluster data read operations, the array controller 33 determines whether failure or replacement of any data storage units makes one portion of the cluster data lost.

If failure or replacement of any data storage units makes one portion of the cluster data lost, the lost portion of the cluster data is recovered from the remaining cluster data using the redundancy calculator 34. The host execution part 31 notifies the external host device 1 of completion of the read data transfer and the data read request.

Referring now to FIG. 5, state transition of reconstruction in the data storage array apparatus 2 will be described. As shown in the above-described read operations, data can be recovered without system halt even if any data storage units are failed. When any data storage units are failed, the state, in which the failed data storage units are not employed and access is continued without redundancy, is referred to as degradiation operation. Redundancy does not exist during the degradiation operation, so that a failed data storage unit must be replaced to return to the normal state. When replacing the failed data storage unit, data is reconstructed from the remaining normal data storage units to recover data for the replaced data storage unit. This operation is referred to as reconstruction operation. As shown in FIG. 5, if failure occurs, the state is changed from the normal state indicated as "normal access" to "degradiation state". After replacement of the failed data storage unit, the state is set to be "reconstruction" state.

Hereinafter, reconstruction operation in the data storage array apparatus 2 will be described. The cluster controller 32 searches cluster without redundancy with reference to the cluster management table 36. After detecting cluster without redundancy, the cluster controller 32 notifies the array controller 33 of the cluster read request. The array controller 33 reads out the cluster data from the data storage units 4a to 4e through the data storage unit controller 35 as in the case of external data read operations. After completion of the cluster read operations, the array controller 33 recovers cluster data corresponding to the replaced data storage unit from the remaining cluster data using the redundancy calculator 34. After completion of the cluster data recovery, the array controller 33 notifies the cluster controller 32 of completion of the cluster read request.

Subsequently, the cluster controller 32 notifies the array controller 33 of the cluster data write request which is read out before. The array controller 33 writes the cluster data into the data storage units 4a to 4e through the data storage unit controller 35 just like external data write operations. After completion of the cluster data write operations, the array controller 33 notifies the cluster controller 32 of completion of the data write request. The cluster controller 32 stores information that redundancy of the reconstructed cluster is recovered into the cluster management table 36.

Such a series of reconstruction operations are repeated until all clusters possess redundancy according to the cluster management table 36. In addition, the reconstruction operations are performed in parallel with external access operations to the external host device 1, with the result that operations are continued without system halt.

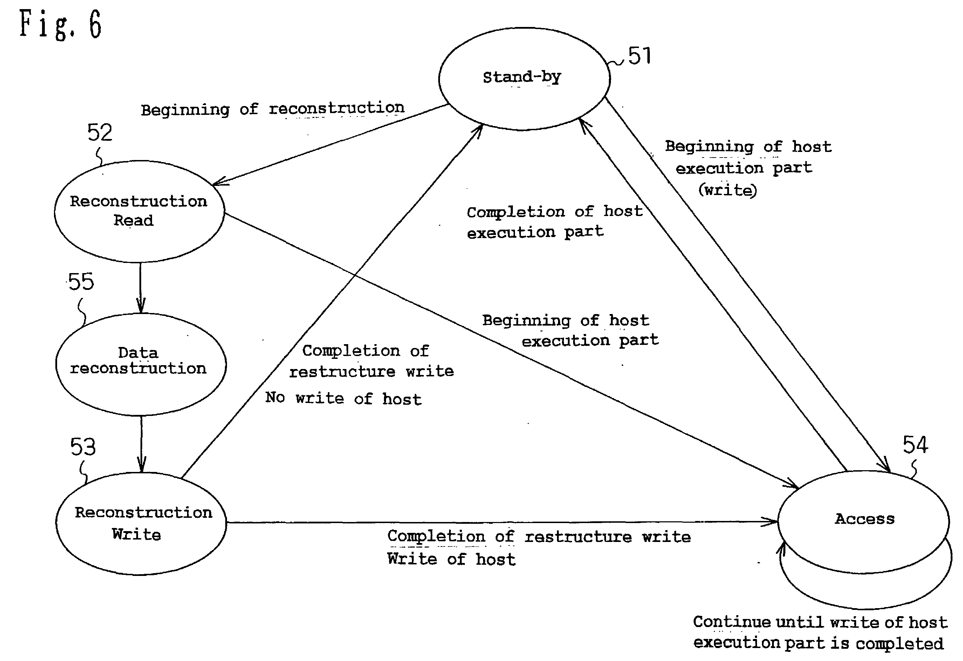

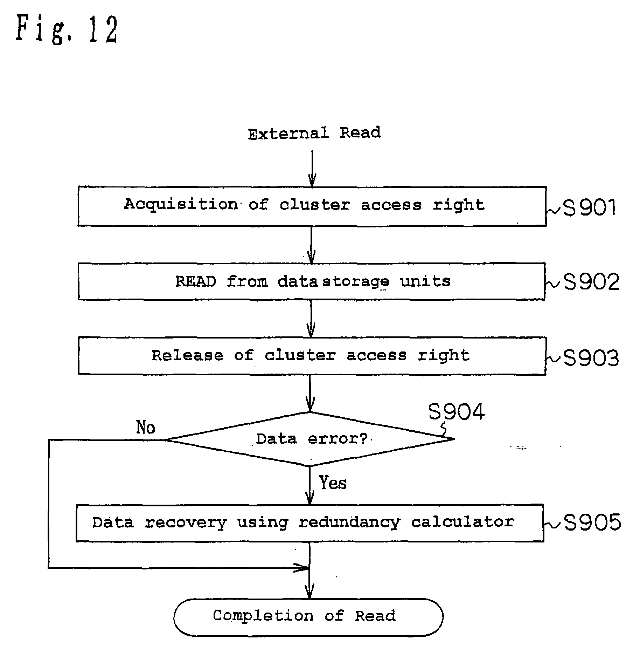

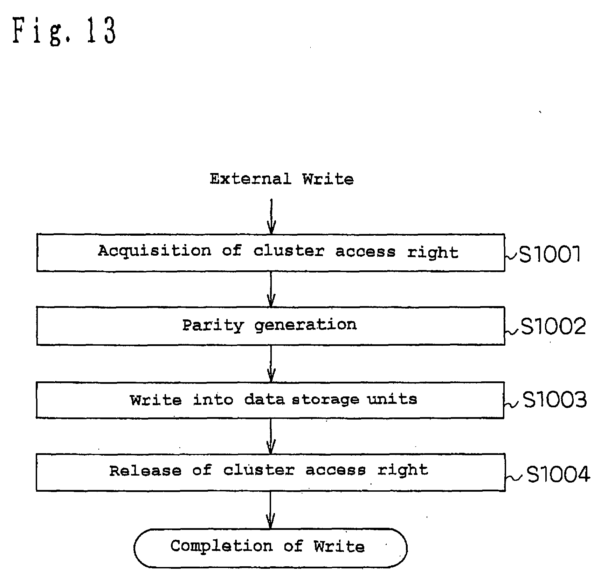

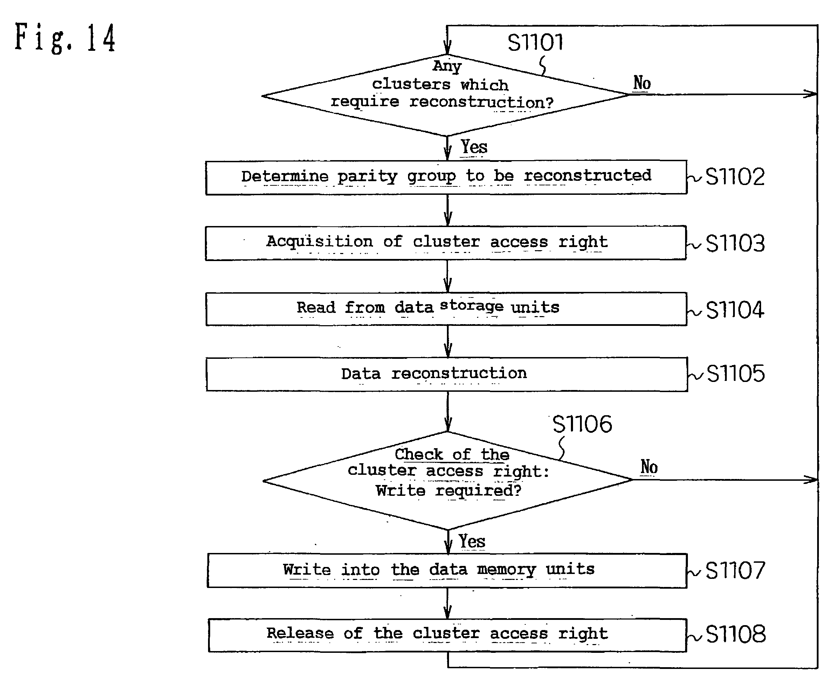

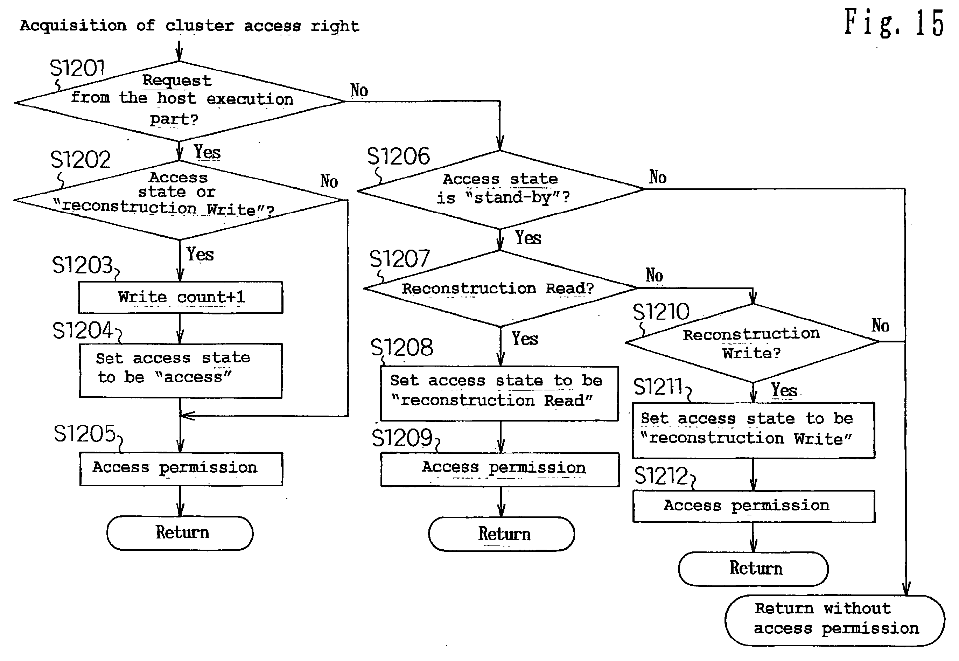

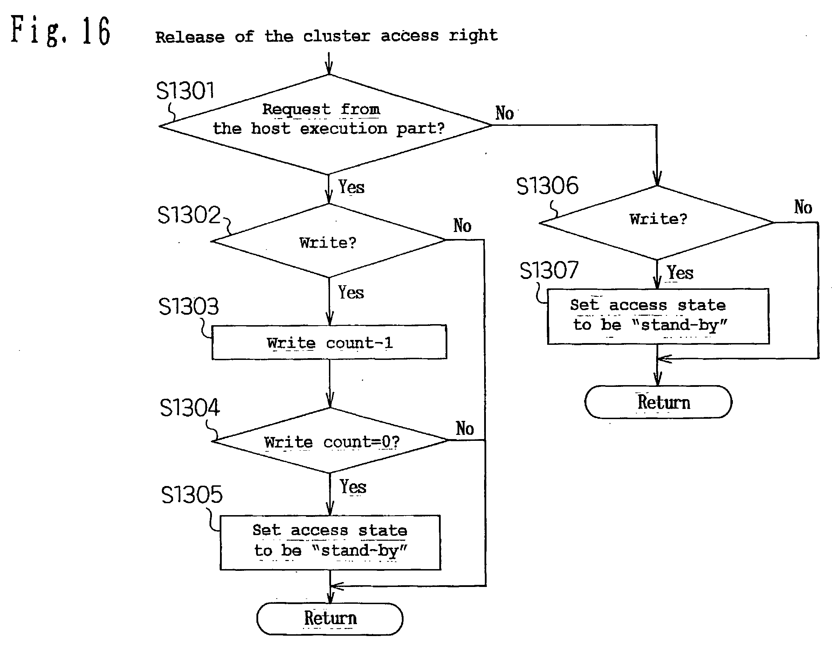

Referring now to FIG. 6 and FIGS. 12 to 16, operations according to this embodiment will be described in detail. FIGS. 15 and 16 illustrate flow charts for the cluster controller 32 to manage cluster access rights for accessing the cluster. FIGS. 12 and 13 illustrate data read (external Read) operation and data write (external write) operation of the data storage array apparatus 2 for accesses from the host device 1. FIG. 14 illustrates a flow chart of reconstruction operations in the cluster controller 32. When clusters are accessed by external Read/Write and reconstruction operations, access right for each cluster is checked, and then actual access is performed.

In addition, in control of the access state for each cluster stored in the cluster management table 36 shown in FIG. 6, when an external access occurs during operations of reconstruction Read 52, data reconstruction 55, and reconstruction Write 53, the access state is changed to an access state 54, and then the access state 54 is continued until write operations are completed. On the other hand, the number of accesses to the cluster from the host execution part 31 is managed as "write count" in the cluster management table 36. When specified "write count" is operated in the access state 54, the access state for the cluster is returned to a stand-by state 51. The access state for each cluster is operated and managed by acquisition routines and release routines of access rights in the controller. In this embodiment, the acquisition and release routines of access rights may be implemented as one part of the functions of the array controller 33. Alternatively, the routines may be constituted independently of the array controller 33.

Referring now to FIG. 12, operations for a data read request from the outside will be described. When receiving a data read request from the outside, the host execution part 31 acquires a cluster access right (S901). Subsequently, the host execution part 31 accesses the array controller 33, and then reads data stored in the data storage units 4a to 4e (S902). After reading data of the data storage units 4a to 4e, the host execution part 31 releases the cluster access right. (S903). Next, the host execution part 31 determines whether the data read out includes any data errors (S904). If data errors are included, the host execution part 31 recovers the data read out using the redundancy calculator 34 (S905). If not, the data is transmitted to the outside in its original condition, and then the read operations are completed.

Referring now to FIG. 13, operations for a data write request from the outside will be described. When receiving a data write request from the outside, the host execution part 31 acquires a cluster access right (S1001). Subsequently, the redundancy calculator 34 generates parity data which is to be stored in the data storage unit 4e, from write data (S1002). The array controller 33 writes the real data into the data storage units 4a to 4d, and the parity data into the data storage unit 4e (S1003). After completion of write, the host execution part 31 releases the cluster access right (S1004), and then the write operations are completed.

Referring now to FIG. 14, reconstruction operations of the on-line reconstruction processing apparatus according to this embodiment will be described. First, the cluster controller 32 determines based on the cluster management table 36 whether clusters which must be reconstructed exist in the data storage units 4a to 4e (S1101). If a cluster which must be reconstructed is included, a parity group to which the cluster belongs is determined (S1102). Clusters which must be reconstructed include ones to be reconstructed after replacement of a data storage unit or ones having incomplete data due to temporal failure.

Next, the cluster access right for the determined parity group is acquired (S1103), and then the array controller 33 reads data (Read) from the data storage units 4a to 4e (S1104). Subsequently, the redundancy calculator 34 performs data reconstruction with the read data and redundancy data (S1105). If the cluster access right is checked (S1106) and Write operations for the cluster is determined to be required, the reconstructed data is written (Write). After completion of the reconstructed data write operations, the access right for the reconstructed cluster is released (S1108). In the above-described processes, an external data access is accepted at any steps S1101 to S1108.

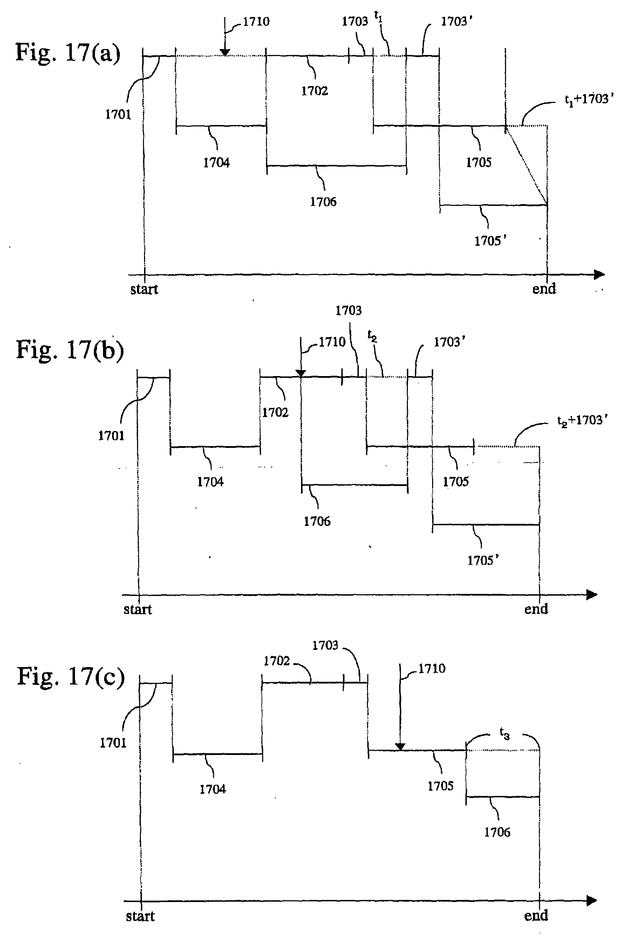

With reference to FIG. 17, operations to accept an external data access while performing steps S1104 to S1108 will be described.

FIGS. 17 (a), (b), and (c) illustrate flow charts of reconstruction operations for a data read request as an external access request.

First, with reference to FIG. 6, control state of access state for each cluster stored in the cluster management table 36 will be described. In FIG. 6, the stand-by state 51 is a state without access for clusters. If cluster reconstruction is performed, the state is changed to the reconstruction Read state 52, and if write operations for reconstructed data into disk devices is performed, the state is changed to a reconstruction Write state 53. At this point, an external access occurs during operations for the reconstruction Read 52 or the reconstruction Write 53, the state is changed to the access state 54, and then the access state 54 is continued until write operations are completed.

With reference to FIGS. 17 (a) , (b), and (c) , operations for an external data read request which is received during reconstruction processing will be described. FIGS. 17 (a), (b), and (c) illustrate operations for a read request during the reconstruction Read state 52, the data reconstruction state 55, and the reconstruction Write state 53 respectively.

The following operations are common either in the case where the data requested to be read from the outside is the same as the cluster to be reconstructed or in the case where it is not so.

First, with reference to FIG. 17 (a), operations for a read request during the reconstruction Read state 52 will be described.

When operations start ("start" in FIG. 17 (a)), the controller 3 outputs read instructions to the data storage units 4a to 4e. When receiving the read instruction, the data storage units 4a to 4e read cluster data and then output it to the controller 3. At this point, a period 1701 is a time period from output of the read instructions to receiving by the data storage units 4a to 4e, and a period 1704 is a time period from beginning to end of cluster data output of the data storage units 4a to 4e for the controller 3.

After completion of the cluster data input from the data storage units 4a to 4e, the controller 3 porforms reconstruction operations with the cluster data and parity. At this point, a period 1702 is a time period from beginning to end of the reconstruction operations.

Subsequently, the controller 3 outputs write instructions for the reconstructed data to the data storage units 4a to 4e. When receiving the write instructions, the data storage units 4a to 4e receive the reconstructed data from the controller 3 and then write it. At this point, a period 1703 is a time period from output of the write instructions to receiving by the data storage units 4a to 4e.

In the above-described operations, at the period 1704, a data read request 1710 is transmitted from the host device 1 to the data storage array apparatus 2. When the controller 3 receives the request, the data storage units 4a to 4e perform the read operations at the period 1704. After the period 1704 ends, the controller 3 makes the data storage units 4a to 4e read data according to the read request 1710. At this point, a period 1706 is a time period from beginning to end of data read of the data storage units 4a to 4e for the host device 1.

At this point, reconstruction operations are performed by the redundancy calculator 34 in the controller 3, and the data read operations are performed by the data storage units 4a to 4e, the data storage unit manager 35, the array controller 33, and the host execution part 31. The two operations are performed simultaneously.

In addition, if data read operations for the host device 1 is continued after the end of reconstruction of cluster data by the redundancy calculator 34, write instructions for the data storage units 4a to 4e are not outputted until the data read operations for the host device 1 is completed. In FIG. 17 (a) , the period 1706 includes the periods 1702, 1703, and moreover, surplus time t1.

When the period 1706 ends, the controller 3 outputs the reconstructed data to the data storage units 4a to 4e, and makes them write it. At this point, a period 1703' is a time period from output of the write instructions to receiving by the data storage units 4a to 4e, and the length is the same as that of the period 1703.

Finally, when receiving the write instructions, each of the data storage units 4a to 4e writes the reconstructed data outputted by the controller 3, and then the processing is completed. At this point, a period 1705' is a time period from beginning to end of write operations of the data storage units 4a to 4e for the data outputted by the controller 3.

If the data storage units 4a to 4e do not receive a read request from the outside, they immediately receive write instructions from the controller 3 after the period 1702 ends, and then write the data outputted from the controller 3. At this point, the period 1705 is a time period from beginning to end of write operations of the data storage units 4a to 4e for the data outputted form the controller 3, and the time length is equal to that of the period 1705'.

Compared the case of not receiving a read request from the outside with the case of receiving a read request from the outside, the end of reconstruction operations in the case of receiving a read request is longer by the period 1703' (1703) + surplus time t1 than the case of not receiving a read request from the outside.

However, period 1706 for reconstruction operations is set in parallel with the period 1703 for data read operations from the outside, so that the time for reconstruction operations with data read operations from the outside is considerably shortened.

With reference to FIG. 17 (b), operations for a read request from the outside during the data reconstruction state 55 will be described.

Operations from the start to reconstruction operations for cluster data read from the data storage units 4a to 4e are the same as ones shown in FIG. 17 (a). The period 1702 is a time period from beginning to end of the reconstruction operations.

When the host device 1 transmits the data read request 1710 to the data storage array apparatus 2 and the controller 3 receives the request during the section 1702, the controller 3 makes the data storage units 4a to 4e read data according to the read request 1710. At this point, while the redundancy calculator 34 in the controller 3 performs reconstruction operations, the data storage units 4a to 4e, the data storage unit controller 35, the array controller 33, and the host execution part 31 perform the data read operations. These two operations are performed simultaneously.

As in the case of FIG. 17 (a), if data read operations for the host device 1 are continued after completion of cluster data reconstruction by the redundancy calculator 34, write instructions are not outputted to the data storage units 4a to 4e until data read operations for host device 1 are completed. In FIG. 17 (b) , the period 1706 possesses a time length, which consists of the periods 1702, 1703, and surplus time t2.

After the period 1706 ends, the controller 3 outputs the reconstructed data to the data storage units 4a to 4e, and makes them write it. At this point, the period 1703' is a time period from output of the write instructions to receiving by the data storage units 4a to 4e, and the time length is equal to that of the period 1703.

Finally, when receiving the write instructions, each of the data storage units 4a to 4e writes the reconstructed data, which is outputted from the controller 3, and then the processing is completed. At this point, the period 1705' is a time period from beginning to end of write operations of the data storage units 4a to 4e for the data outputted from the controller 3.

If a read request from the outside is not received, write instructions from the controller 3 are accepted immediately after the period 1702 ends, and the data storage units 4a to 4e write the data outputted from the controller 3 . At this point, the period 1705 is a time period from beginning to end of write operations of the data storage units 4a to 4e for the data outputted from the controller 3, and the time length is equal to that of the period 1705'.

Compared the case of not receiving a read request from the outside with the case of receiving a read request from the outside, the end of reconstruction operations in the case of receiving a read request is longer by the period 1703' (1703) + surplus time t2 than the case of not receiving a read request from the outside.

However, period 1706 for reconstruction operations is set in parallel with the period 1703 for data read operations from the outside, so that the time for reconstruction operations with data read operations from the outside is considerably shortened.

Referring now to FIG. 17 (c), operations for a read request during the reconstruction Write state 53 will be described.

Operations from the start to reconstruction operations for cluster data read from the data storage units 4a to 4e are the same as ones shown in FIG. 17 (b). Furthermore, in this case, reconstruction operations are completed and the controller 3 outputs write instructions to the data storage units 4a to 4e. At this point, the period 1702 is a time period from beginning to end of the reconstruction operations, and the period 1703 is a time period from output of the write instructions to receiving by the data storage units 4a to 4e.

When receiving write instructions from the controller 3, each of the data storage units 4a to 4e writes the reconstructed data which is outputted from the controller 3. At this point, the period 1705 is a time period from beginning to end of write operations of the data storage units 4a to 4e for the data outputted from the controller 3.

If the host device 1 transmits the data read request 1710 to the data storage array apparatus 2 during the period 1705, the controller 3 suspends receiving of the data read request 1710 and continues current write operations for the reconstructed data, which is outputted from the controller 3.

When write operations for the reconstructed data are completed and the period 1705 ends, the controller 3 accepts the data read request 1710 and makes the data storage units 4a to 4e begin to read data for the host device 1.

Then, the data storage units 4a to 4e execute the data read operations for the host device 1.

In the case of FIG. 17 (c), compared the case of not receiving a read request from the outside with the case of receiving a read request from the outside, the end of reconstruction operations in the case of receiving a read request is longer by the period 1706 for data read operations from the outside than the case of not receiving a read request from the outside.

As described above with the three cases shown in FIGS. 17 (a) , (b) , and (c) , when a data request is transmitted from the outside:
(1) If the data storage units 4a to 4e are reading cluster data for reconstruction processing to the controller 3, they complete read operations for the cluster data and then perform data read operations to the outside in parallel with reconstruction of the cluster data.
(2) If the controller 3 is reconstructing cluster data read from the data storage units 4a to 4e, reconstruction of the cluster data and data read operations to the outside are performed simultaneously.
(3) If the data storage units 4a to 4e are performing write' operations for data reconstructed by the controller 3, write operations for the reconstructed data are completed and then data read operations to the outside are performed.

In each operation of (1), (2), and (3), data read operations to the outside are performed on the state transition of the reconstruction Read 52, the data reconstruction 55, and the reconstruction Write 53 respectively. At least, in operations of (1) and (2), access response performance for external access requests is improved, so that entire access response performance can be improved.

Next, operations for a data write request from the outside during reconstruction processing will be described.

First, if data requested for write operations from the outside is different from cluster to be reconstructed, the same operations as the above-described ones for a read request are performed. In other words, "read request" in the reconstruction Read state 52 shown in FIG. 17 (a) , the data reconstruction state 55 shown in FIG. 17 (b), and the reconstruction Write state 53 shown in FIG. 17 (c) may be replaced with "write request" respectively.

Second, if data requested for write operations from the outside is the same as cluster to be reconstructed, the following operations are performed.
(a) If receiving a write request from the host device 1 during the reconstruction Read state 52, the controller 3 suspends read operations for cluster data from the data storage units 4a to 4e, and then overwrites and stores the outside data at the location, where the cluster data of the data storage units 4a to 4e is stored, according to the write request from the host device 1. Alternatively, after completion of cluster data read operations from the data storage units 4a to 4e, the controller 3 may overwrite and then store the outside data at the location, where the cluster data of the data storage units 4a to 4e is stored. Subsequently, the redundancy calculator 34 discards the read cluster data.
(b) If receiving a write request from the host device 1 during the data reconstruction state 55, the controller 3 immediately suspends data reconstruction, and overwrites and then stores the outside data at the location, where the cluster data of the data storage units 4a to 4e is stored, according to the write request from the host device 1.
(c) If receiving a write request from the host device 1 during the reconstruction Write state 53, the controller 3 suspends write operations for reconstructed data to the data storage units 4a to 4e, and overwrites and then stores the outside data at the location where the cluster data of the data storage units 4a to 4e is stored, according to the write request from the host device 1. Subsequently, the redundancy calculator 34 discards the incomplete cluster data in the write operations. Alternatively, after the reconstruction Write state 53, the data transmitted from the host device 1 may be overwritten.

In the above-described operations shown in FIG. 17 (a), a read or write request 1710 from the host device 1 is performed during the period 1704 in which the data storage units 4a to 4e perform read operations for cluster data to the controller 3. Alternatively, the operations for the request may be performed during the period 1701 in which the controller 3 transmits read instructions and then the data storage units 4a to 4e receive them.

Referring now to FIGS. 15 and 16, acquisition and release processing for a cluster access right in the above-described operations will be explained.

FIG. 15 illustrates a flow chart of acquisition operations for a cluster access right.

First, in the acquisition routine for a cluster access right the cluster controller 32 receives an application for acquisition of a cluster access right, and then determines whether the application is transmitted from the host execution part 31 or the cluster controller 32 (S1201). If the application is transmitted from the host execution part 31, the cluster controller 32 determines whether a cluster to be accessed is in the "reconstruction Write" state or in the Write state of reconstruction processing (S1202). If the cluster is in the Write state of reconstruction processing, write count of the cluster in the cluster management table 36 is incremented by 1 (S1203), and the access state of the cluster is set to "access" (S1204). Subsequently, the cluster controller 32 issues access permission to the host execution part 31. On the other hand, at S1202, if the access state of a cluster to be accessed is not the "reconstruction Write", access permission is immediately issued at S1205.

On the other hand, at S1201, if the application is transmitted from the cluster controller 32, the cluster controller 32 determines whether a cluster to be accessed is the "stand-by" state (S1206). If the access state of the cluster is "stand-by", the cluster controller 32 determines whether the access from the cluster controller 32 is read of reconstruction processing (S1207). If the access is read of reconstruction processing, the access state of the cluster is set to the "reconstruction Read" (S1208) and access permission is issued to the cluster controller 32 (S1209).

On the other hand, at S1206, if the access state of the cluster is not "stand-by", the cluster has been in the access state of reconstruction, with the result that access permission is not issued to the cluster controller 32. In addition, at S1207, if the access from the cluster controller 32 is not read of processing, the cluster controller 32 determines whether the access is write of reconstruction processing (S1210). If the access is write of reconstruction processing, the access state of the cluster is set to be the "reconstruction Write" (S1211) and access permission is issued to the cluster controller 32 (S1212). At S1210, if the access is not reconstruction Write, the access is not necessary, therefore, access permission is not issued.

Referring now to a flow chart shown in FIG. 16, operations for release of a cluster access right will be described.

First, in the release routine for a cluster access right the cluster controller 32, receives an application for release of a cluster access right, and then determines whether the application is transmitted from the host execution part 31 or the cluster controller 32 (S1301). If the application is transmitted from the host execution part 31, the cluster controller 32 determines whether the access is "Write", which completes external write processing (S1302). If the access is to complete the external Write processing, the cluster controller 32 decrements write count of the cluster in the cluster management table 36 by 1 (S1303), and then determines whether the remainder of the write count is equal to zero (S1304). If the remainder is zero, the access state is set to be "stand-by" (S1305), and then the processing is completed. If the access is not "Write" at S1302 or the write count is not equal to zero at S1304, the processing is completed.

In addition, in operations at S1301, if a release application is transmitted from the cluster controller 32, the cluster controller 32 determines whether the access is "Write", which completes reconstruction Write processing (S1306). If the access is to complete reconstruction Write processing, the access state of the cluster is set to be "stand-by" (S1307), and then the processing is completed. If the access is not to complete reconstruction Write processing, the processing is directly completed.

In the above-described operations, the Read step for data to be reconstructed, the data reconstruction step, and the Write step for reconstructed data are divided by inserting a confirmation step for a cluster access right and processed with time interval. The reconstruction processing is repeated until clusters to be reconstructed do not exist. When such a cluster does not exit, transition to the "normal access" state is executed. The reconstruction processing is performed in parallel with external Read and Write which are accesses to the data storage units from the outside.

For the above-described external Read and Write, and reconstruction processing, operation timing of reconstruction processing is compared between prior art and this embodiment.

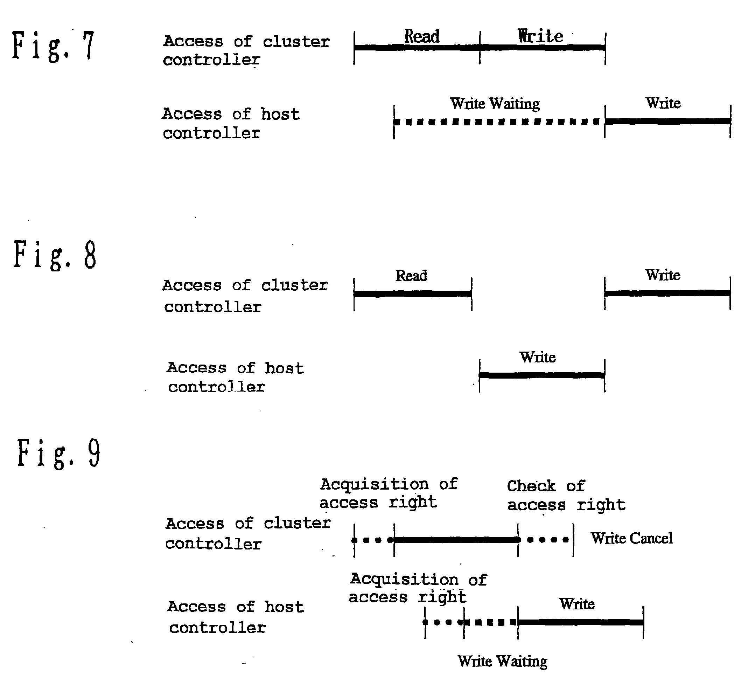

FIG. 7 illustrates a relation between conventional reconstruction processing and operations for a data access request from a host device. Read and write operations in conventional reconstruction processing are performed continuously. When receiving an access request from the host device during the reconstruction processing, the access request is in a stand-by state until the read and write operations are completed. After the reconstruction processing, the access request is processed.

For operation timing in this embodiment, as shown in FIG. 8, read and write operations for cluster reconstruction are divided to be processed. Therefore, an access request from a host device can be interrupted into the divided read and write operations to decrease delay time. As a result, fast response to access requests from external host devices can be realized. Although data size to be accessed and time are not illustrated in FIG. 8, the processing time of read and write operations for reconstruction is not less than several tens ms if clusters are managed at a size of 1 MB. In this case, dividing read and write operations for cluster reconstruction can decrease delay by a half.

Next, with reference to FIGS. 8 and 9, operation timing for correctness assurance of write data will be described.

FIG. 8 illustrates external write operations in reconstruction processing. If the Write requested cluster from the host device 1 is identified as the reconstructed cluster in the data storage array apparatus 2, the cluster to be written into the data storage units according to the access request from the host device 1 is the justified data to be written. However, in an operation example shown in FIG. 8, Write operations in divided reconstruction processing are performed later, so that the data acquired in reconstruction processing is written over the data written by the host device 1. Therefore, the correctness of write data cannot be assured.

To avoid such a situation, in this embodiment, Write operations for the same cluster are checked by acquisition and release of cluster access rights shown in FIGS. 15 and 16, and management of access state for each cluster shown in FIG. 6. If Write operations are performed into the same cluster, reconstruction Write operations are canceled.

The operation timing is illustrated in FIG. 9. Access right check is performed after reconstruction Read operations, and reconstruction Write operations are canceled (Write Cancel) if determined to be Write into the same cluster. With this method, correctness for data can be assured.

As described above, an on-line reconstruction processing apparatus and on-line reconstruction processing methods in data storage array apparatus according to this embodiment can assure normal data with a redundancy structure even if failure occurs. In addition, faster response to a host device can also be achieved during reconstruction processing after replacement of a failed data storage unit. Furthermore, correctness for data write operations requested from a host device can be assured at all times by cancel of data write operations in reconstruction processing.

In this embodiment, each cluster state is managed with the cluster management table 36, so that the state can be set corresponding to external or reconstruction access. Therefore, if an external access request is received during reconstruction access, the external access can interrupt data read operations for reconstruction, data reconstruction processing, and write operations for reconstructed data.

Alternatively, data consistency can be assured by management of cluster access rights, so that external access and reconstruction access may be demultiplexed by general multitask processing. Actually, external access and reconstruction access are processed with multitask OS using a time sharing method.

In the above-description, the cluster management table 36 is stored in the cluster controller 32. Alternatively, the table maybe stored in the array controller 33. In addition, management of cluster access rights shown in FIGS. 15 and 16 is performed by the cluster controller 32. Alternatively, the array controller 33 may manage cluster access rights.

### (Second embodiment)

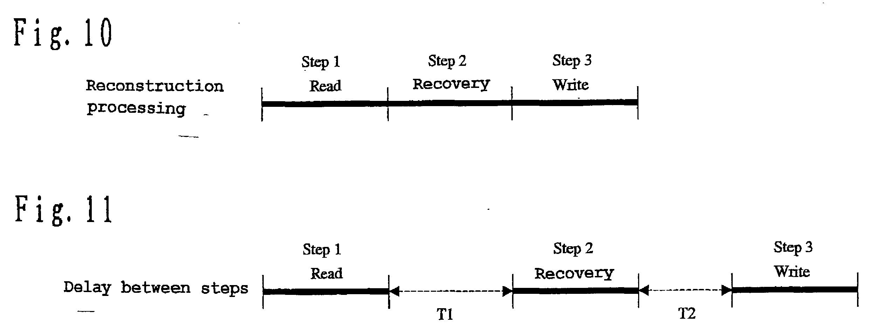

Turning now to FIGS. 10 and 11, for an on-line reconstruction processing method and on-line reconstruction processing apparatus according to the second embodiment, delay processing with division of reconstruction steps will be described. A structure of the on-line reconstruction processing apparatus according to this embodiment is the same as that of the first embodiment. Therefore, FIG. 3 and other figures are employed for description, and overlapped description is omitted. FIG. 10 illustrates a timing chart without delay processing for reconstruction steps. Steps 1 to 3 are reconstruction Read, data reconstruction processing, and reconstruction Write respectively. In order to increase average bandwidth for an access from the host device 1 to the data storage array apparatus 2, a bandwidth for reconstruction must be restricted. As shown in FIG. 11, the band for reconstruction is restricted by setting shift time T1 and T2 between Step 1 and Step 2 and between Step 2 and Step 3 respectively. T1 and T2 adjust the timing to issue an access request from the cluster controller 32 to the array controller 33.

T1 and T2 are varied changed according to request frequency of data access from the external host device 1. For example, in the case of high data access frequency, the external host device 1 requires a greater bandwidth, so that T1 and T2 are set to be longer. In addition, an average bandwidth of data access from the external host device 1 is employed instead of data access frequency, and if the average bandwidth is greater, T1 and T2 are set to be longer. If the state without data access from the external host device 1 continues, T1 and T2 are set to be shortened. At this point, T1 and T2 maybe set to be zero. With this method, the bandwidth for external access is guaranteed. Furthermore, delays between steps do not occur if not accessed from the outside, so that efficient reconstruction operations can be achieved. In the above description, T1 and T2 are set in Steps 1 to 3. Alternatively, for T0, which is a time from specifying a cluster to be reconstructed to process beginning of Step 1, shift time may be set similarly according to an external access bandwidth to control the bandwidth for reconstruction.

Furthermore, an adjustment of shift time may be performed as the same length in all the Steps or individually according to each the Steps. And in the case that a Step is performed when data access is received from the external host device 1, setting shift time may be performed between the Step and the next Step, or between the next Step of the Step and further next Step of the next Step.

As described above, according to this embodiment, reconstruction access band can be restricted corresponding to an external access bandwidth. Furthermore, external access bands can be guaranteed, and reconstruction processing can be efficiently executed while external access is small.

In check of access rights to the data storage units, if access request from the host device 1 and restructure access request from the cluster controller 32 occur at the same time, the access request from the host device 1 is prior to that from the cluster controller 32 at all times. This may also guarantee response to the host device 1.

In each of the above-described embodiments, the controller 3 constituted of the data storage array apparatus 2 corresponds to the on-line reconstruction processing apparatus according to this invention. In addition, the array controller 33 and the data storage unit manager 35 correspond to the second and the fourth means of this invention respectively. The cluster controller 32 and the redundancy calculator 34 correspond to the third means of this invention. Furthermore, the cluster controller 32 corresponds to the first and the fifth means of this invention.

Also, this invention is programs to make a computer execute operations all or one part of steps (or processes, operations, and actions) of-the above-described on-line reconstruction processing methods according to this invention in cooperation with a computer.

This invention is a medium, which possesses programs to make a computer execute all or one part of operations in all or on part of steps of the above-described on-line reconstruction processing methods according to this invention, wherein programs that are readable for a computer and are read by the computer perform the above-described operations in cooperation with the computer.

One part of steps (or processes , operations, and actions) in this invention means some steps in plural ones or one part of operations in a step.

Also, one part of devices (or elements, circuits, and parts) according to this invention means some devices in plural ones, one part of means (or elements, circuits, and parts) in a device, or one part of functions in one part of means.

Furthermore, a computer-readable recording medium, in which programs according to this invention are stored, is included in this invention.

As one implementation of programs according to this invention, the programs may be stored in a computer-readable recording medium and perform in cooperation with the computer.

In addition, as one implementation of programs according to this invention, the programs may be transmitted through a transmission medium, read by a computer, and perform in cooperation with the computer.

Storage media include ROM, and transmission media include a transmission medium, such as the Internet, optical communication, radio wave, and sound wave.

The above-described computer according to this invention is not limited to hardware, such as CPU, and may include firmware, OS, and peripheral devices.

As described above, the structure according to this invention may be implemented with software or hardware.

The data storage array apparatus according to this invention divides reconstruction processing, and receives access from an external host device in the interval of Read/Write operations to achieve faster response. In addition, if external access processing (Write) actually occurs in the interval of Read/Write operations in reconstruction processing and the same cluster is accessed, reconstruction Write operations are canceled to guarantee data write order. Furthermore, delay is provided between operations, which are reconstruction Read, recovery, and reconstruction Write operations, to control the band for reconstruction and guarantee the band for access from an external host device.

## Claims

1. An on-line reconstruction processing method for data storage array apparatus which possesses plural segments formed of divided storage areas in plural data storage units and plural parity groups grouped of the segments in the plural data storage units by a specified algorithm, and stores redundancy data into at least one segment of the plural parity groups, comprising:
a first step of specifying the parity group which needs to be reconstructed;
a second step of reading data of the parity group which needs to be reconstructed, from the data storage units;
a third step of reconstructing the data of the parity group with the data read out by the second step; and
a fourth step of writing the data reconstructed by the third step into the data storage array apparatus,
wherein the second step includes a read instruction step of instructing the data storage units corresponding to the parity groups to read data and a data output step at which the data storage units perform data read and output according to the read instructions,
the fourth step includes a write instruction step of instructing the data storage units corresponding to the parity groups to write the reconstructed data and a data input step at which the data storage units receive and write the reconstructed data according to the write instructions, and
an external host device performs data access to the data storage array apparatus between beginning of the read instruction step and end of the data input step.

2. An on-line reconstruction processing method for data storage array apparatus, which possesses plural segments formed of divided storage areas in plural data storage units and plural parity groups grouped of the segments in the plural data storage units by a specified algorithm, and stores redundancy data into at least one segment of the plural parity groups, comprising:
a first step of specifying the parity group which need to be reconstructed;
a second step of reading data of the parity group which need to be reconstructed, from the data storage units;
a third step of reconstructing the data of the parity group with the data read out by the second step; and
a fourth step of writing the data reconstructed by the third step into the data storage array apparatus,
wherein the second step includes a read instruction step of instructing the data storage units corresponding to the parity groups to read data and a data output step at which the data storage units perform data read and output according to the read instructions,
the fourth step includes a write instruction step of instructing the data storage units corresponding to the parity groups to write the reconstructed data and a data input step at which the data storage units receive and write the reconstructed data according to the write instructions, and
an external host device performs data access to the data storage array apparatus between beginning of the data output step and end of the data input step.

3. The on-line reconstruction processing method according to claim 1 or 2, wherein if data access from the external host device instructs external read of data to the external host device, whether the parity group specified by the instruction is the same as the parity group specified by the first step or not, the step when the instruction was received is continued or the next step is performed after the external read operations.

4. The on-line reconstruction processing method according to claim 1 or 2, wherein if data access from the external host device instructs data write to the data storage array apparatus from the external host device,
in the case where the address of the parity group specified by the instruction is the same as the address specified by the first step, the data write operations from the external host device are performed and the fourth step is not performed or interrupted, and
in the case where the address of the parity group specified by the instruction is different from the address specified by the first step, the step when the instruction was received is continued after completion of the data write operations.

5. The on-line reconstruction processing method according to claim 1 or 2, further comprising;
A fifth step of setting an adjustable shift time between each of steps which are on or after the timing of the data access.

6. The on-line reconstruction processing method according to claim 5, wherein the shift time is set at least at the second step and/or at the fourth step.

7. The on-line reconstruction processing method according to claim 5, wherein the shift time is varied according to data access frequency from the external host device.

8. The on-line reconstruction processing method according to claim 5, wherein the shift time is varied according to an average band of data access from the external host device.

9. The on-line reconstruction processing method according to claim 5, wherein the shift time is set to be zero after completion of data access from the external host device.

10. An on-line reconstruction processing apparatus in data storage array apparatus which possesses plural segments formed of divided storage areas in plural data storage units and plural parity groups grouped of the segments in the plural data storage units by a specified algorithm, and stores redundancy data into at least one segment of the plural parity groups, comprising:
first means of specifying the parity group which needs to be reconstructed;
second means of reading data of the parity group which needs to be reconstructed, from the data storage units;
third means of reconstructing the data of the parity group with the data read out by the second step; and
fourth means of writing the data reconstructed by the third step into the data storage array apparatus,
wherein the second means performs read instructions to instruct the data storage units corresponding to the parity groups to read data and performs data output operations in which the data storage units read and output data according to the read instructions,
the fourth means performs write instructions to instruct the data storage units corresponding to the parity groups to write the reconstructed data and performs data input operations in which the data storage units receive and write the reconstructed data according to the write instructions, and
an external host device performs data access to the data storage array apparatus between beginning of the read instructions and end of the data input operations.

11. An on-line reconstruction processing apparatus in data storage array apparatus which possesses plural segments formed of divided storage areas in plural data storage units and plural parity groups grouped of the segments in the plural data storage units by a specified algorithm, and stores redundancy data into at least one segment of the plural parity groups, comprising:
first means of specifying the parity group which needs to be reconstructed;
second means of reading data of the parity group which needs to be reconstructed, from the data storage units;
third means of reconstructing the data of the parity group with the data read out by the second step; and
fourth means of writing the data reconstructed by the third step into the data storage array apparatus,
wherein the second means performs read instructions to instruct the data storage units corresponding to the parity groups to read data and performs data output operations in which the data storage units read and output data according to the read instructions,
the fourth means performs write instructions to instruct 'the data storage units corresponding to the parity groups to write the reconstructed data and performs data input operations in which the data storage units receive and write the reconstructed data according to the write instructions, and
an external host device performs data access to the data storage array apparatus between beginning of the data output operations and end of the data input operations.

12. The on-line reconstruction processing apparatus according to claim 10 or 11, wherein if data access from the external host device instructs external read of data to the external host device, whether the parity group specified by the instruction is the same as the parity group specified by the first means or not, the operation of the means when the instruction was received is continued or the operation of the next means is performed after the external read operations.

13. The on-line reconstruction processing apparatus according to claim 10 or 11, wherein if data access from the external host device instructs data write to the data storage array apparatus from the external host device,
in the case where the address of the parity group specified by the instruction is the same as the address specified by the first means, data write operations from the external host device are performed and the operation of the fourth means is not performed or interrupted, and
in the case where the address of the parity group specified by the instruction is different from the address specified by the first means, the operation of the previous means when the instruction was received is continued after completion of the data write operations.

14. The on-line reconstruction processing apparatus according to claim 10 or 11, further comprising;
A fifth means of setting an adjustable shift time between the operations of each means which are on or after the timing of the data access.

15. The on-line reconstruction processing apparatus according to claim 14, wherein the shift time is set at least in operations of the second means and/or the fourth means.

16. The on-line reconstruction processing apparatus according to claim 14, wherein the shift time is varied according to data access frequency from the external host device.

17. The on-line reconstruction processing apparatus according to claim 14, wherein the shift time is varied according to average band of data access from the external host device.

18. The on-line reconstruction processing apparatus according to claim 14, wherein the shift time is set to be zero after completion of data access from the external host device.

19. Programs to make a computer execute all or one part of the on-line reconstruction processing method according to claim 1, which comprises:
a first step of specifying the parity group which needs to be reconstructed;
a second step of reading data of the parity group which needs to be reconstructed, from the data storage units, including a read instruction step of instructing the data storage units corresponding to the parity groups to read data and a data output step at which the data storage units perform data read and output according to the read instructions;
a third step of reconstructing the data of the parity group with the data read out by the second step; and
a fourth step of writing the data reconstructed by the third step into the data storage array apparatus, including a write instruction step of instructing the data storage units corresponding to the parity groups to write the reconstructed data and a data input step at which the data storage units receive and write the reconstructed data according to the write instructions.

20. A medium stores programs to make a computer execute all or one part of the on-line reconstruction processing method according to claim 1, which comprises:
a first step of specifying the parity group which needs to be reconstructed;
a second step of reading data of the parity group which needs to be reconstructed from the data storage units, including a read instruction step of instructing the data storage units corresponding to the parity groups to read data and a data output step at which the data storage units perform data read and output according to the read instructions;
a third step of reconstructing the data of the parity group with the data read out by the second step; and
a fourth step of writing the data reconstructed by the third step into the data storage array apparatus, including a write instruction step of instructing the data storage units corresponding to the parity groups to write the reconstructed data and a data input step at which the data storage units receive and write the reconstructed data according to the write instructions,
and enables a computer to process the programs.
